# EUROPÄISCHE PATENTSCHRIFT

(11) **EP 1 003 682 B1**
(45) Veröffentlichungstag und Bekanntmachung des Hinweises auf die Patenterteilung: **16.10.2002**
(21) Anmeldenummer: 98945186.9
(22) Anmeldetag: 08.08.1998
(51) Int. Cl.: B65D 90/00, B60P 7/13

(54) **STAUSTÜCK UND VERFAHREN ZUM STAUEN VON BEHÄLTERN**
HOLDING PIECE AND METHOD FOR HOLDING CONTAINERS
ELEMENT DE RETENUE ET PROCEDE PERMETTANT DE RETENIR DES CONTENEURS

(30) Priorität: 12.08.1997 DE 19734813
(43) Veröffentlichungstag der Anmeldung: 31.05.2000
(73) Patentinhaber: MacGregor-Conver GmbH, 28279 Bremen (DE)
(72) Erfinder: GLOYSTEIN, Jürgen, D-28355 Bremen (DE)
(74) Vertreter: Möller, Friedrich, Dipl.-Ing.
(86) Internationale Anmeldenummer: EP9805038
(87) Internationale Veröffentlichungsnummer: WO99007623

(56) Entgegenhaltungen:
- EP-A- 0 477 887
- WO-A-92/05093
- DE-U- 29 621 266
- DE-U- 29 717 934

## Beschreibung

Die Erfindung betrifft ein Verfahren zum Stauen von Behältern gemäß dem Oberbegriff des Anspruchs 1. Darüberhinaus betrifft die Erfindung Staustücke gemäß den Oberbegriffen der Ansprüche 5 bzw. 8.

Üblicherweise werden zum Transport von Waren Behälter (Container) eingesetzt, die an ihren acht Ecken mit Eckbeschlägen, sogenannten comer castings, ausgerüstet sind. Diese sind in den übrigen Containern konstruktiv so eingebunden, dass die über die comer castings eingeleiteten Kräfte den Container an einem vorgesehen Platz auf einer Auflage, beispielsweise aus unteren Behältern, zu halten vermögen. In den comer castings, die ähnlich wie der gesamte Container im Regelfall nach internationalen (ISO) Normen ausgebildet sind, sind Öffnungen vorgesehen, durch die Staustücke in einen vom Eckbeschlag (comer casting) umschlossenen Raum eingeführt und mit diesen verriegelt werden können.

Staustücke der hier angesprochenen Art sind im Laufe der Zeit einer regen Entwicklungstätigkeit unterworfen gewesen. Viele verschiedene Arten von Staustücken sind vorhanden. Manche von ihnen sind mit einem Drehzapfen ausgestattet, der nach seinem Einführen in den Innenraum eines comer castings verdreht wird und dadurch den Eckbeschlag (comer casting) und damit den gesamten Container mit einer Auflage, beispielsweise einem Schiffsdeck oder mindestens einem unterhalb des zu sichernden Containers stehenden Container fest verbindet. Derartige als Twistlocks bezeichnete Staustücke, wie sie z.B. aus der WO 92 05093 A bekannt sind, haben sich in der Praxis gut bewährt. Sie bereiten jedoch Schwierigkeiten an denjenigen Stellen, die beim Verladen und/oder Entladen der Container schlecht zu erreichen sind. Dazu zählen in erster Linie die sogenannten 20'-ISO-Container-Fugen. Diese entstehen dadurch, dass auf einem für einen 40'-Container vorgesehenen Standplatz zwei Container zu je 20' abgestellt werden. Zwischen den beiden 20'-Containern ist in diesen Fällen eine Fuge von 3 Zoll-Breite (76 mm) vorgesehen. Diese Fuge ist zu schmal, um eine menschliche Betätigung zuzulassen. Aus diesem Grunde wird seit jeher versucht, im Bereich dieser Fuge eine Verriegelung der Container vorzusehen, die unabhängig von menschlicher Betätigung ist.

Zu diesem Zwecke ist es aus der DE 296 21 266 U bekannt, die Container mit unterschiedlich ausgebildeten Verbindungselementen zusammenzukuppeln. Es finden zwei sogenannte Semiautomatik Twistlocks (SAT) Verwendung, die zwei Ecken an außenliegenden Stirnseiten der zu verbindenden Container zugeordnet sind. Ferner finden zwei Verbindungselemente für die beiden übrigen Ecken Verwendung, die den zu den schmalen Stirnseiten der Container zugeordnet sind. Die unterschiedlichen Verbindungselemente müssen an den richtigen Stellen platziert werden. Kommt es zu nicht vermeidbaren Verweckslungen, ist ein Lösen der Container nur mit erheblichen Problemen möglich.

Aufgabe der vorliegenden Erfindung ist es daher, ein Staustück der einleitend genannten Art so zu verbessern und ein Verfahren zum Stauen insbesondere Containem zu schaffen, womit die Verriegelung und/oder Entriegelung von Containern im allgemeinen und besonders im Bereich der ISO-20'-Fuge erleichtert wird.

Ein Verfahren zur Lösung der eingangs genannten Aufgabe weist die Maßnahmen des Anspruchs 1 auf. Demnach werden zum Verbinden bzw. Zusammenkuppeln der Behälter untereinander oder mit einer Auflage gleiche Staustücke verwendet. Es werden erfindungsgemäß den vier Ecken eines Behälters vier gleiche Staustücke zugeordnet. Durch entsprechende Ausbildung der Staustücke ist es möglich, einen Behälter von darunterliegenden Behältern oder einem Auflager abzukuppeln, also zu lösen, indem die Verriegelung der Staustücke auf einer Seite des Behälters, die frei zugänglich ist, durch Betätigen der Handhabe des Seils oder eines sonstigen Zugantriebes geöffnet wird. Dadurch lässt sich der obere Behälter ankippen, wodurch dieser auch von den übrigen beiden Staustücken lösbar ist, ohne dass diese insbesondere im Bereich einer schmalen, unzugänglichen Fuge zwischen benachbarten Behältern (Containern) durch Betätigen des Zugantriebes geöffnet werden müssen. Dazu lässt sich auch in unzulänglichen Bereichen ein Behälter von darunterliegenden Behältern oder einer Aufnahme abkuppeln.

Die oben genannte Aufgabe wird auch durch ein Staustück mit den Merkmalen des Anspruchs 5 gelöst. Dadurch, dass die Verbindung zwischen dem Führungsstück des Staustückes und der Ausnehmung, insbesondere im Eckbeschlag des jeweiligen Behälters, wahlweise durch einen Zugantrieb, beispielsweise ein Zugseil, oder eine Relativbewegung des Behälters gegenüber dem Führungsstück möglich ist, lassen sich mit ein und demselben Staustück Behälter mit einer Auflage, insbesondere mindestens einem untenliegenden Container, verbinden und vor allem auch lösen, wenn zwischen benachbarten Behältern nur eine schmale Fuge vorhanden ist, die eine manuelle Betätigung des Zugantriebs und der entsprechenden Staustücke nicht zulässt.

Mit Hilfe eines solchen Staustücks kann ein Container automatisch im Bereich einer Auflage verriegelt werden, auf der der Container abgestellt werden soll. Dabei kommen als Auflage insbesondere Böden von Schiffsladeräumen, Schiffsdecks und Oberseiten von anderen Containern in Betracht, auf die ein zu verladener Container abgestellt werden soll. Darüber hinaus sind auch andere Auflagen denkbar, beispielsweise Stauflächen, auf denen Container an Land gestaut werden sollen.

Der Riegel ist innerhalb seiner Führung vergleichsweise leicht zu verschieben, sodass relativ kleine Kräfte ausreichen, um diese Verschiebung vornehmen zu können. Darüber hinaus reichen relativ kleine Kräfte aus, um den Riegel aus seiner Verriegelungsposition in seine Entriegelungsstellung zurück zu schieben. Im Regelfall stehen zu diesem Zweck Federkräfte zur Verfügung.

Gemäß einer bevorzugten Ausführungsform der Erfindung ist der Riegel in einer Verriegelungsstellung durch eine auf sein dem Verriegelungsende abgewandtes Steuerende einwirkende Kraft beaufschlagt. In diesem Falle erstreckt sich der Riegel durch eine sich durch das gesamte Führungsstück verlaufende Führung, sodass er an seinen beiden Enden zur Durchführung von Bewegungen beaufschlagt werden kann.

Gemäß einer weiteren bevorzugten Ausführungsform der Erfindung ist das Steuerende in der Verriegelungsstellung von dem auf die Auflage abgesenkten Behälter beaufschlagt. Durch diese Steuerung des Riegels ergibt sich die Möglichkeit, die Riegelbewegung abhängig von der Bewegung des zu verriegelnden Containers zu steuern.

Ein weiteres Staustück zur Lösung der eingangs genannten Aufgabe weist die Merkmale des Anspruchs 8 auf. Durch den schräg zur Ebene der Auflage oder von Behältern verlaufenden Riegel ist es möglich, durch ein Verkippen des Behälters (Container), in den das Führungsstück mit dem Riegel hineinragt, die vom Verankerungsende des Riegels wegweisende Rückseite des Führungsstückes außer Eingriff mit der Ausnehmung im Behälter zu bringen. Dadurch kann eine Relatiwerschiebung des Behälters zum Führungsstück herbeigeführt werden, aus der ein Abkoppeln des Staustückes vom Behälter resultiert. Das Staustück kann auf diese Weise vom Behälter gelöst bzw. abgekuppelt werden, ohne dass ein Zugantrieb des Staustückes manuell betätigt werden muss. Des weiteren wird durch ein Staustück mit den Merkmalen des Anspruchs 8 erreicht, dass sich die Führung schräg zu einer von der Auflage aufgespannten Ebene erstreckt. In diese Ebene mündet der Riegel mit seinem Steuerende ein und das Verriegelungsende liegt oberhalb der Ebene mit einem Abstand zu dieser, der der in der Ausnehmung vorgesehenen Verriegelungsposition entspricht. Auf diese Weise wird erreicht, dass das Steuerende des Riegels beim Absenken des Containers erst beaufschlagt wird, wenn das Verriegelungsende sich in die Verriegelungsposition hineinschieben kann.

Gemäß einr weiteren bevorzugten Ausführungsform der Erfindung ist der Riegel von einer ihn in Richtung auf die Entriegelungsstellung verschiebende Federkraft beaufschlagt. Auf diese Weise wird erreicht, dass nach einer Entlastung des Steuerendes die Federkraft in die Lage versetzt wird, den Riegel in die Entriegelungsstellung zurück zu schieben.

Grundsätzlich sind die vier verschiedenen Ausführungsformen für den Riegel denkbar. Gemäß einer bevorzugten Ausführungsform der Erfindung wird der Riegel einstückig ausgebildet. In dieser Form wird er durch den sich absenkenden Behälter an seinem Steuerende so weit in die Führung hineingerückt, wie er an seinem Verriegelungsende aus der Führung herausragt. Diese Ausführungsform ist einfach und wirft im Regelfall während des Betriebes keine Probleme auf.

Gemäß einer anderen bevorzugten Ausführungsform der Erfindung besteht der Riegel aus mindestens zwei in seiner Längsrichtung hintereinander angeordneten Teilstücken, die einander bei innerhalb der Führung stattfindenden Schiebebewegungen beeinflussen. Bei dieser Ausführungsform der Erfindung wird das die Verriegelung vornehmende hintere Teilstück von einer Druckfeder in die Verriegelungsstellung gedrückt, wenn der zu verriegelnde Container das Steuerende in Richtung auf die Führung beaufschlagt. Auf diese Weise wird das die Verriegelung vornehmende hintere Teilstück elastisch innerhalb der Führung gelagert, so dass es auch bei schwierigen Verladeaktionen, beispielsweise bei einem auf den Container einwirkenden erheblichen Winddruck elastisch auf jeden Bedarfsfall reagieren kann.

Gemäß einer dritten bevorzugten Ausführungsform der Erfindung ist das dem Verriegelungsende zugewandte hintere Teilstück mit einem Mechanismus zum Verriegeln und Entriegeln versehen. Ein solcher Mechanismus besitzt den großen Vorteil, dass auch eine manuelle Entriegelung vorgenommen werden kann, falls eine Bewegung des zu entriegelnden Containers noch nicht beabsichtigt ist. Auf diese Weise wird ein Staustück geschaffen, das im Bereich des zugänglichen Endes eines Containers statt beispielsweise eines Twistlocks eingesetzt werden kann. Andererseits erlaubt dieses Staustück auch eine vollautomatische Steuerung mit Hilfe des Steuerendes, auf dessen Bewegungen durch Absenken und Anheben des Containers Einfluß genommen werden kann.

Schließlich wird eine weitgehende Vereinfachung des Riegels dadurch erzielt, dass diese sich nur noch durch einen dem Verriegelungsende zugewandeten hinteren Teil der Führung erstreckt, aus der der Riegel mit seinem Verriegelungsende herausragt. Das entgegengesetzte Ende der Führung ist in diesem Falle verschlossen, so dass sich eine den Riegel beaufschlagende Feder daran abstützen kann. Der große Vorteil dieser Ausführungsform besteht darin, dass eine Führungskante der Ausnehmung im Eckbeschlag (comer casting) des Behälters beim Absenken desselben über eine am Verriegelungsende des Riegels vorgesehene Gleitfläche gleitet und dabei den Riegel in die Führung entgegen der Kraft der Druckfeder schiebt. Diese schiebt das Verriegelungsende in die Verriegelungsstellung, sobald der Container vollkommen abgesenkt ist und die Führungskante das Verriegelungsende passiert hat. Nunmehr kann eine Verschiebung des Riegels nur noch mit Hilfe einer Handhabe bzw. eines Zugantriebs, insbesondere eines Zugseils oder dergleichen, vorgenommen werden, die dem Staustück die Eigenschaft eines SAT verleiht.

Es ist weiterhin vorgesehen, ein den Zugantrieb bildendes Seil am freien Ende mit einer knopfartigen Handhabe zu versehen. Die Länge des aus dem Staustück herausragenden Abschnittes des Seils ist bei verriegeltem Staustück so bemessen, dass in einer engen Fuge zwischen benachbarten Behältern der Knopf in ausreichendem Maß, also ganz oder teilweise, in eine seitliche, aufrechte Ausnehmung insbesondere im Eckbeschlag des das Staustück tragenden Behälters Aufnahme findet. Auf diese Weise wird vermieden, dass die knopfartige Handhabe in einer engen Fuge zerstört wird oder einem Zusammenkuppeln der Behälter entgegenwirkt.

Weitere Einzelheiten der Erfindung ergeben sich aus der nachfolgenden ausführlichen Beschreibung und den beigefügten Zeichnungen, in denen bevorzugte Ausführungsformen der Erfindung beispielsweise dargestellt sind.

In den Zeichnungen zeigen:

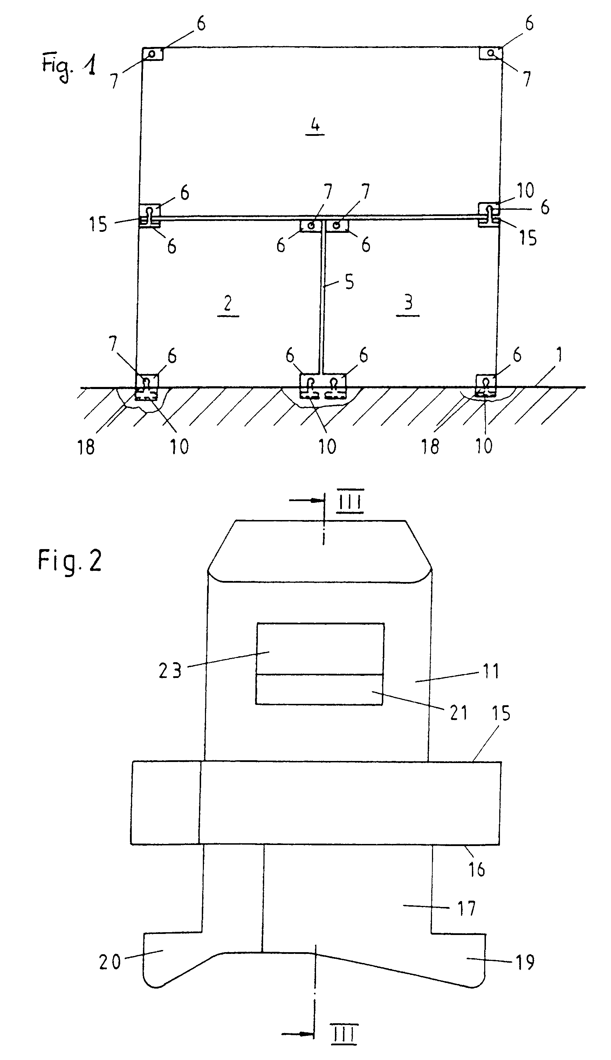

- Fig. 1: eine Seitenansicht von zwei auf einer Auflagefläche gestapelten Containerlagen,
- Fig. 2: eine Vorderansicht eines Staustückes,

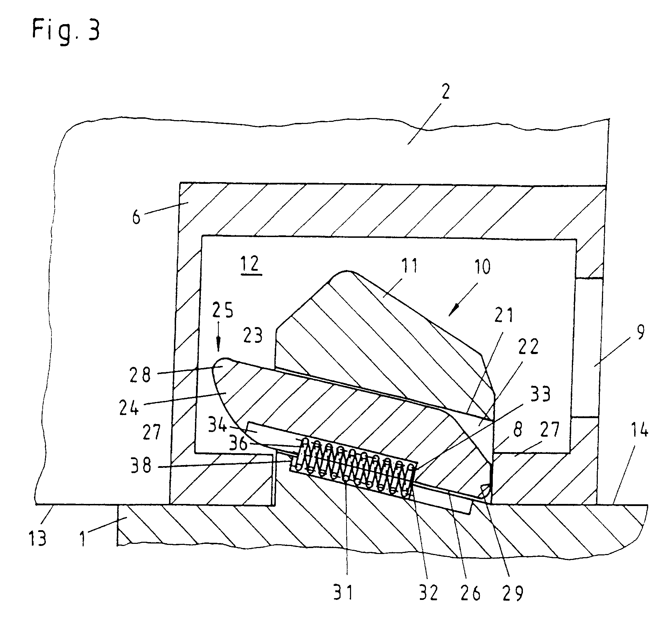

- Fig. 3: einen Längsschnitt durch eine Containerecke und ein in diese hineinragendes Staustück gemäß der Schnittlinie III-III in Fig. 2,

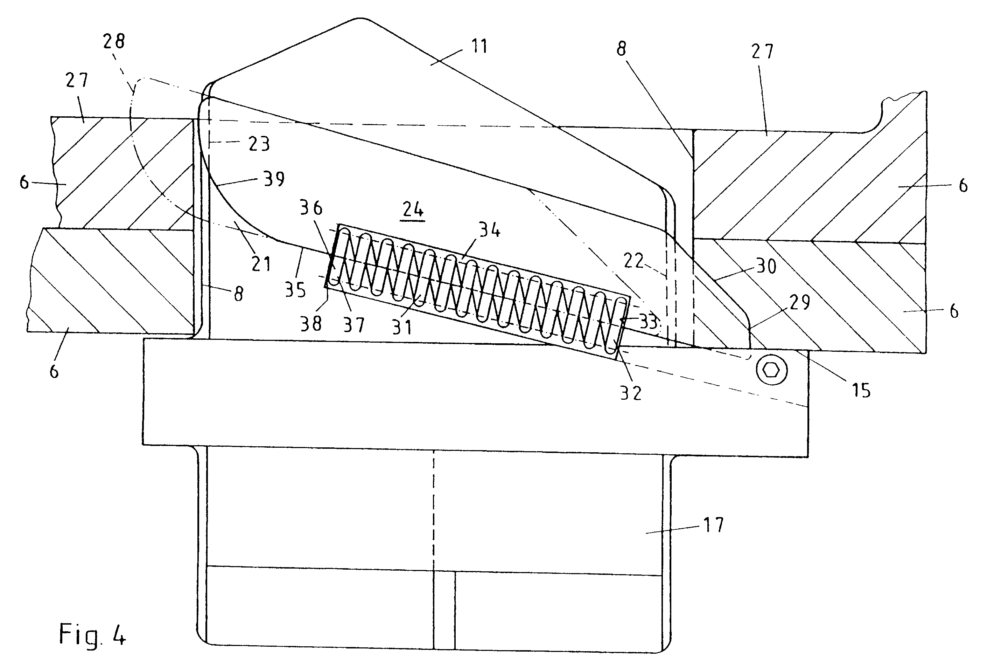

- Fig. 4: eine Ausschnittsvergrößerung des Längsschnittes in Fig. 3,
- Fig. 5: eine Systemskizze eines Staustückes mit einem aus zwei Teilstücken bestehenden Riegel,
- Fig. 6: eine Druntersicht unter einen aus zwei Teilstücken bestehenden Riegel,
- Fig. 7: eine Seitenansicht eines aus zwei Teilstücken bestehenden Riegels mit eingelegten Federn,
- Fig. 8: eine Vorderansicht zweier ineinander gesteckter Spiralfedern,
- Fig. 9: eine Systemskizze eines Staustückes mit einem zweigeteilten Riegel und einem Verriegelungsmechanismus,
- Fig. 10: eine Systemskizze eines Staustückes mit einem aus zwei Teilstücken bestehenden Riegel in der Entriegelungsposition,
- Fig. 11: eine Systemskizze eines aus zwei Teilstücken bestehenden Riegels in der Verriegelungsposition,
- Fig. 12: einen mit einem Hebel versehender Verriegelungsmechanismus,
- Fig. 13: einen Längsschnitt durch ein Staustück mit einem einseitig in die Verriegelungsposition herausragenden Riegel,
- Fig. 14: einen Längsschnitt durch ein Staustück mit einem durch einen Verriegelungsmechanismus in die Entriegelungsposition gezogenen Riegel,
- Fig. 15: eine Systemskizze von im Längsschnitt dargestellten Containerecken in der Verriegelungsposition (Stauart: hängend),
- Fig. 16: eine Systemskizze eines Längsschnittes durch drei einander benachbarte Containerecken, von denen zwei zu einem Container gehören (Stauart: stehend), und
- Fig. 17: eine Systemskizze als Längsschnitt durch zwei einander benachbarte Containerecken eines Containers beim Abheben des Containers (Stauart: stehend).

Auf einer Auflage 1, beispielsweise einem Schiffsdeck sind drei Container 2, 3, 4 gestapelt. Die der Auflage 1 benachbarten unteren Container 2, 3 sind als 20'-Container ausgebildet, während der obere Container 4 als ein 40'-Container die beiden unteren Container 2, 3 überragt. Die Länge der beiden unteren Container 2, 3 ist um eine 20'-ISO-Containerfuge 5 kürzer als die gesamte Länge des 40'-Containers 4. Jeder der drei Container 2, 3, 4, ist an seinen Ecken mit Containerecken 6 versehen, von denen jeder Container acht Stück besitzt. Bei den Containerecken 6 handelt es sich vorzugsweise um genormte Eckbeschläge, sogenannte corner castings.

In diesen Containerecken 6 sind Öffnungen 7, 8, 9 vorgesehen, die dazu dienen, den Container 2, 3, 4 gegenüber einer Auflage 1 oder gegenüber anderen Containern 2, 3, 4 zu befestigen.

Zum Verbinden der Container 2, 3 und 4 untereinander und auf der Auflage 1 dienen Befestigungsvorrichtungen. Jeder Containerecke 6 jedes Eckbeschlages eines Containers 2, 3 bzw. 4 sind zur Verbindung mit der Auflage 1 oder mindestens einem über oder unter dem betreffenden Container 2, 3 , 4 angeordneten Container vier Befestigungsvorrichtungen zugeordnet. Jeder Containerecke 6 an der Oberseite und/oder Unterseite des betreffenden Containers 2, 3, 4 ist mithin eine Befestigungsvorrichtung zugeordnet. Erfindungsgemäß finden gleiche Befestigungsvorrichtungen, und zwar Staustücke 10, Verwendung. Es handelt sich dabei um halbautomatische Staustücke 10, sogenannte semiautomatische Twistlocks (SAT).

Ein Staustück 10 ragt mit einem Führungsstück 11 in einen von der Containerecke 6 umgebenen Innenraum 12 hinein. Auf diesem Führungsstück 11 wird die Containerecke 6 beim Absetzen eines Containers 2, 3, 4 geführt. Auf diese Weise wird gewährleistet, daß der Container 2, 3, 4 genau an einer beabsichtigten Stelle beispielsweise auf der Auflage 1 steht.

Dabei stützt ich der Container 2, 3, 4, mit seiner der Auflage 1 zugewandten Unterfläche 13 auf einer ihr zugewandten Oberfläche 14 der Auflage 1 ab. Im Regelfall liegt der Container 2, 3, 4 mit seiner Unterfläche 13 auf einer Arbeitsfläche 15 auf, die das Führungsstück 11 umgibt, das sich aus der Arbeitsfläche 15 erhebt. Auf einer der Arbeitsfläche 15 abgewandten Unterfläche 16 stützt sich das Staustück 10 auf der Auflage 1 ab. An die Unterfläche 16 schließt sich in eine von dem Führungsstück 11 abgewandte Richtung ein Verriegelungsstück 17 an, das in eine in der Auflage 1 vorgesehene Ausnehmung 18 hineinragen kann und in dieser mit Verriegelungsnocken 19, 20 in üblicher Weise verriegelt sein kann. In ähnlicher Weise kann das Staustück 10 mit seinem Verriegelungsstück 17 auch in Containerecken 6 von unten stehenden Containern 2, 3 verriegelt sein, wenn auf diesen unteren Containern 2, 3 ein oberer Container 4 abgestellt werden soll.

Durch das Führungsstück 11 erstreckt sich eine Führung 21, die bezüglich einer von der Auflage 1 aufgespannten Ebene schräg verläuft. Dabei mündet die Führung 21 mit ihrer der Auflage 1 zugewandten unteren Mündungsöffnung 22 im Bereich der Arbeitsfläche 15, während ihre gegenüberliegende obere bzw. höherliegende Mündungsöffnung 23 oberhalb der Arbeitsfläche 15 so angeordnet ist, daß ein sich durch die Führung 21 erstreckender Riegel 24 in einer die Containerecke 6 gegenüber der Auflage 1 verriegelnden Verriegelungsposition 25 befindet. In dieser Verriegelungsposition 25 drückt der Riegel 24 mit seiner der Auflage 1 zugewandten Unterkante 26 auf eine die Auflage 1 beaufschlagende Seitenfläche 27 der Containerecke 6.

Der Riegel 24 ist einstückig ausgebildet und ragt mit einem Verriegelungsende 28 aus der oberen Mündungsöffnung 23 in den Innenraum 12 der Containerecke 6 hinein. Dabei wird der Riegel 24 auf seinem dem Verriegelungsende 28 abgewandten Steuerende 29 von der Seitenfläche 27 der Containerecke in Richtung auf die Verriegelungsposition 25 beaufschlagt, wenn der Container 2 in Richtung auf die Auflage 1 abgesenkt wird.

Zu diesem Zwecke ist das Steuerende 29 mit einer Abschrägung 30 versehen, auf der die Seitenfläche 27 des sich absenkenden Conainers 2 gleitet. Dabei drückt das Gewicht des Containers 2 den Riegel 24 entgegen dem Druck einer Druckfeder 31 in die Führung 21 hinein. Dabei stützt sich die Druckfeder 31 mit ihrem ersten Stirnende 32 an einer Endfläche 33 ab, die eine Aufnahme 34 auf ihrer dem Steuerende 29 zugewandten Ende begrenzt. Diese Aufnahme 34 ist muldenförmig in einer dem Verriegelungsstück 17 zugewandten Unterfläche 35 des Riegels 24 ausgebildet.

Mit ihrer der ersten Stirnfläche 32 abgewandten zweiten Stirnfläche 36 stützt sich die Druckfeder 31 im Bereich eines aus der Aufnahme 34 herausragenden Unterteils 36 an einem in der Führung 21 ausgebildeten zweiten Widerlager 38 ab, so daß der Riegel 24 in seiner Verriegelungsstellung unter der Spannung der Druckfeder 31 steht. Sobald der Container 2 angehoben oder verkippt wird und das Steuerende 29 von der Seitenfläche 27 freigegeben und dadurch entlastet wird, drückt die Druckfeder 31 den Riegel 24 wieder in seine Entriegelungsstellung zurück, so daß das Verriegelungsende 28 von der Führung 21 aufgenommen wird. In dieser Lage des Riegels 24 gleitet der dem Verriegelungsende 28 benachbarte Teil der Seitenfläche 27 an einer abgerundeten Vorderkante 39 des Riegels 24 entlang, so daß die Containerecke 6 von dem Führungsstück 11 abgehoben werden kann.

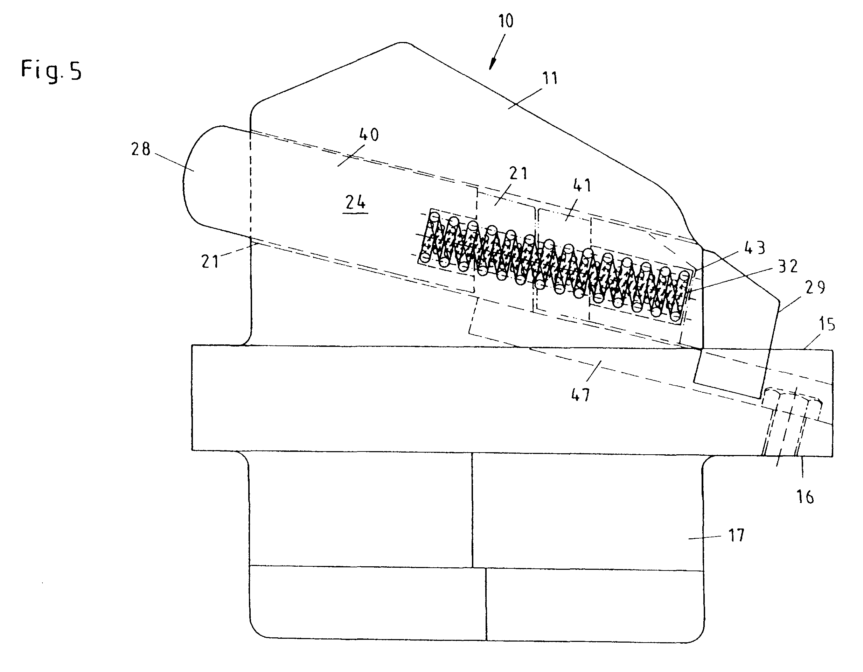

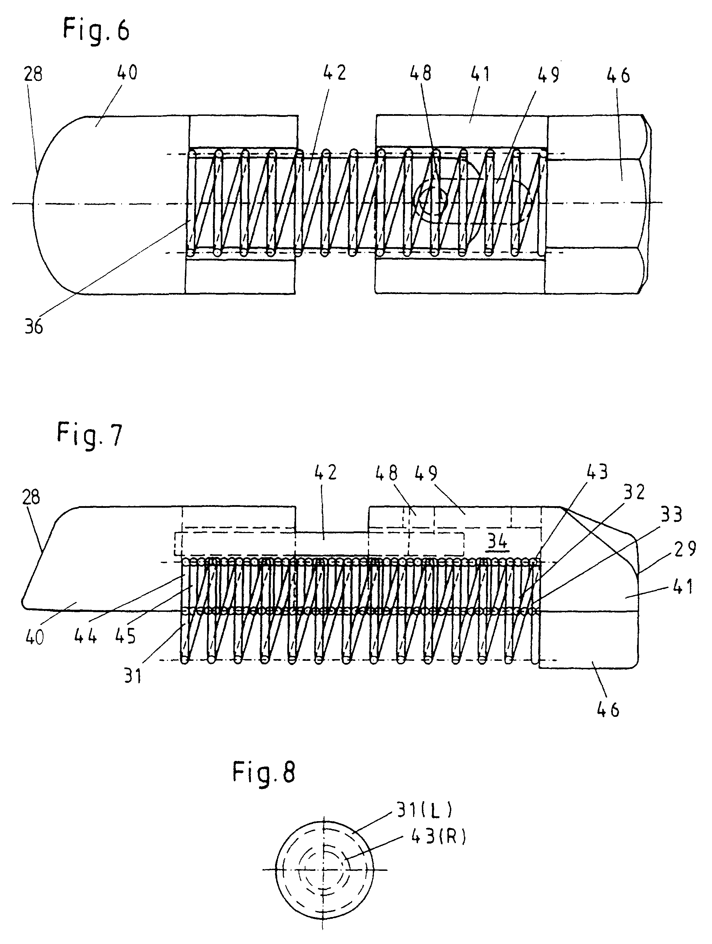

Eine andere Ausführungsform des Staustückes 10 besitzt einen Riegel 24, der aus zwei Teilstücken 40, 41 besteht (Fig. 5 bis 8). Diese beiden Teilstücke 40, 41 sind in Längsrichtung der Führung 21 hintereinander angeordnet. Sie sind über einen Verbindungssteg 42 miteinander verbunden, der sich durch eine in den beiden Teilstücken 40, 41 ausgebildete Aufnahme 34 erstreckt. In dieser Aufnahme 34 sind zwei Druckfedern 31 angeordnet, von denen sich eine kleinere Druckfeder 43 durch die größere Druckfeder 31 erstreckt. Dabei sind die beiden Druckfedern 31, 43 gegensinnig gewickelt, das heißt die größere Druckfeder 31 kann in Linksrichtung und die kleinere Druckfeder 43 in Rechtsrichtung gewickelt sein.

Die größere der beiden Druckfedern 31 ragt aus der Aufnahme 34 heraus und stützt sich mit ihrer ersten Stirnfläche 32 an einer die Aufnahme 34 im Teilstück 41 begrenzenden Endfläche 33 ab. Das aus der Aufnahme 34 herausragende untere Ende der größeren Druckfeder 31 stützt sich an dem in der Führung 21 ausgebildeten Widerlager ab.

Demgegenüber ragt die kleinere Druckfeder 43 aus der Aufnahme 34 nach unten nicht heraus. Sie stützt sich vielmehr ausschließlich an der im Teilstück 41 ausgebildeten Endfläche 33 der Aufnahme 34 ab, während ihr der Endfläche 33 gegenüberliegendes vorderes Ende 44 sich an einer ihm benachbarten Endfläche 45 abstützt, die im Teilstück 40 ausgebildet ist.

Die beiden Teilstücke 40, 41 sind in der Führung 21 gegen Herausgleiten gesichert. Sie werden mit Hilfe einer am Teilstück 41 ausgebildeten Führungsfläche 46 in einer entsprechend vorgesehenen Nut 47 geführt, die in der Führung 21 ausgebildet ist. Darüber hinaus sind die beiden Teilstücke 40, 41 durch den Verbindungssteg 42 miteinander verbunden, von dem ein Führungsstift 48 in ein Langloch 49 einmündet und in diesem in Längsrichtung des Riegels 24 geführt wird. Auf diese Weise ist gewährleistet, daß bei einer Entlastung des hinteren Teilstückes 41 von der sich abhebenden Seitenfläche 27 der Containerecke 6 das hintere Teilstück 41 in der Führung 21 von der Druckfeder 31 beaufschlagt in eine Entriegelungsposition gleitet und dabei das vordere Teilstück 40 über den Führungsstift 48 mit in die Entriegelungsposition zieht.

Bei dieser aus zwei Teilstücken 40, 41 bestehenden Konstruktion des Riegels 24 ist gewährleistet, daß bei einer Beaufschlagung des Steuerendes 29 durch die Seitenfläche 27 der Containerecke 6 die Bewegung des Verriegelungsendes 28 sich elastisch der jeweiligen Absenkstellung anpassen kann, in der sich die Seitenfläche 27 befindet. Dabei wird zunächst das hintere Teilstück 41 entlang dem Langloch 49 in Richtung auf das vordere Teilstück 40 verschoben. Erst wenn die Seitenfläche 27 das Verriegelungsende 28 des vorderen Teilstückes 40 freigegeben hat, drückt die kleinere Druckfeder 43 das vordere Teilstück 40 in die Verriegelungsstellung.

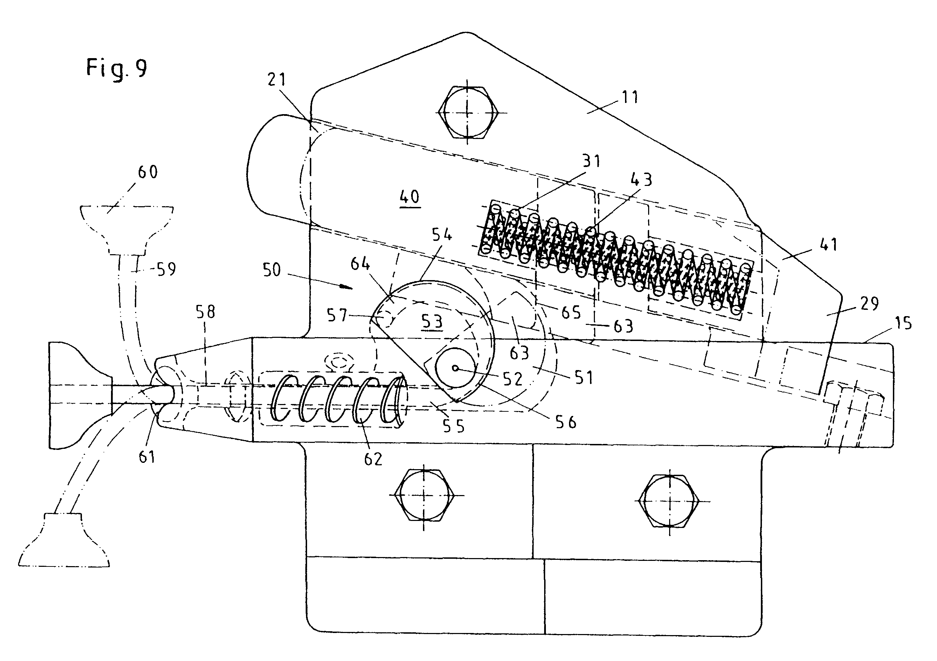

In einer Anzahl von Fällen erweist sich eine Entriegelung des Containers 2, 3, 4 als notwendig bevor eine Freigabe der Seitenfläche 27 durch das Steuerende 29 stattfindet. Dieser Fall kann beispielsweise eintreten, wenn der Container 2, 3, 4 nicht parallel zur Auflage 1, sondern schräg dazu angehoben wird, so daß er im Bereich einer verriegelten Seite noch fest mit der Auflage 1 verbunden ist, während er auf einer manuell entriegelten Seite bereits angehoben wird. Diesem Bedarfsfall wird eine Ausführungsform gerecht, die mit einem Mechanismus 50 zum Verriegeln und Entriegeln versehen ist (Fig. 9-11). Dieser besteht im wesentlichen aus einem Exzenter 51, der als ein um eine Achse 52 verschwenkbares Bogenstück 53 ausgebildet ist. Dieses Bogenstück 53 ist von einem Bogen 54 begrenzt. Die Achse 52 durchdringt das Bogenstück 53 außerhalb eines Mittelpunktes des Bogens.

Das Bogenstück 53 ist mit einem Zugantrieb, im gezeigten Ausführungsbeispiel einem Schwenkantrieb 55, verbunden. Dieser ist als ein sich über den Bogen 54 erstreckendes Seil 56 ausgebildet, das in einer sich durch den Bogen 54 erstreckenden Rille verläuft und mit dem Bogenstück 53 an einem der Achse 52 gegenüberliegenden Ende 57 verbunden ist. Das Seil 56 wird durch eine sich durch die Arbeitsfläche 15 erstreckende Bohrung 58 nach außen geführt und trägt an seinem aus der Bohrung 58 herausragenden Ende 59 eine Handhabe 60, beispielsweise einen bequem zu erfassenden Knopf. Die Bohrung 58 mündet in einem die Umlenkung des Seiles 56 begünstigenden Mündungsteil 61, so daß eine für den jeweiligen Benutzer günstige Stellung ermöglicht wird, wenn dieser an der Handhabe 60 das Seil 56 aus dem Mündungsteil 61 herauszieht. Darüber hinaus ist mit dem Seil 56 auch noch eine Rückstellfeder 62 verbunden, die nach einer Entlastung des Seils 56 dieses wieder in seine Ausgangsstellung zurückzieht.

Das Bogenstück 53 schmiegt sich mit seinem Bogen 54 an einem den Bogen 54 entsprechend ausgebildeten Mitnehmer 63 am Teilstück 40 an. Dieser Mitnehmer 63 besitzt eine dem Bogenstück 53 zugewandte Bogenfläche 65, gegen die der Bogen 54 beim Verschwenken des Bogenstückes 53 angepresst wird. In einer Ausgangsposition 64 wird mit Hilfe des Bogenstückes 53 kein Druck auf die Bogenfläche 65 ausgeübt, so daß das vordere Teilstück 40 lediglich unter dem Druck der Druckfedern 31 bzw. 43 steht. Befindet sich das am hinteren Teilstück 41 ausgebildete Steuerende 29 unter dem Einfluß der Seitenfläche 27 und ist der Riegel 24 dadurch in seine Verrieelungsstellung verschoben, so wird er dabei von dem Bogenstück 53 nicht beeinflußt.

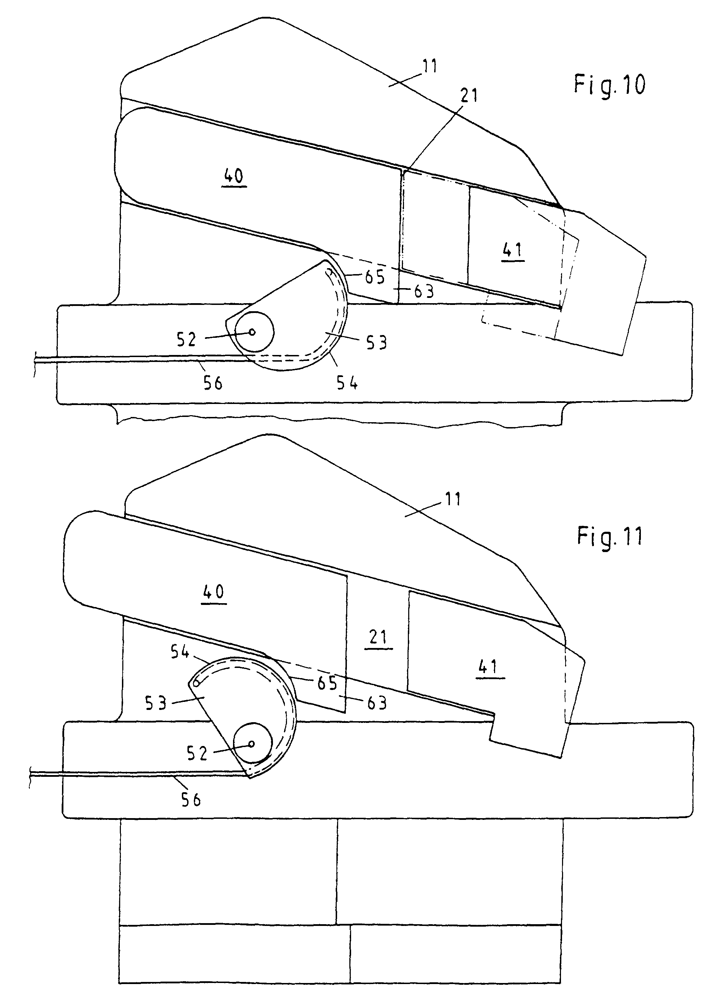

Stellt sich nunmehr heraus, daß das vordere Teilstück 40 aus der Verriegelungsposition in Richtung auf die Führung 21 zurückgezogen werden muß, ohne daß das Steuerende 29 durch Abheben der Seitenfläche 27 entlastet wird, so wird auf das Seil 56 mit Hilfe der Handhabe 60 ein Zug ausgeübt, so daß sich der Exzenter 51 um die Achse 52 verschwenkt. Dabei kommt der Bogen 54 an der Bogenfläche 65 des Mitnehmers 63 zur Anlage und drückt diesen - und somit das Teilstück 40 - bei weiterem Ziehen an der Handhabe 60 in Richtung auf das hintere Teilstück 41. Dadurch wächst die Spannung in den beiden Federn 31, 43. Trotzdem kann das vordere Teilstück 40 soweit zrückgezogen werden, daß nunmehr die Seitenfläche 27 der Containerecke 6 von dem Führungsstück 11 abgezogen werden kann. Diese Schwenkstellung des Bogenstückes 53 ist in Fig. 10 dargestellt. Demgegenüber zeigt Fig. 11 das Teilstück 40 in seiner Verriegelungsposition, in der der Bogen 54 des Bogenstückes 53 die Bogenfläche 65 des Mitnehmers 63 nicht beaufschlagt.

Die Länge des Seils 56 und die Abmessungen der knopfartigen Handhabe 60 sind in besonderer Weise gewählt. Demnach verfügt die Handhabe 60 über eine Größe, die es ihr ermöglicht, ganz oder teilweise in eine aufrechte Ausnehmung in einer Stirnseite der entsprechenden Containerecke 6, insbesondere in einen Eckbeschlag, einzutreten. Dementsprechend ist die Länge des aus dem Staustück 10 seitlich herausragenden Seils 56 bemessen. Dadurch kann bei engen Fugen zwischen benachbarten Containern die Handhabe 60 des jeweiligen Staustückes 10 seitlich durch die entsprechende Ausnehmung in die betreffende Containerecke 6 eintauchen. Die Handhabe 60 am Seil 56 stört dann nicht beim Stauen der Behälter. Insbesondere lassen sich die Behälter mit einem Zwischenraum stauen, der kleiner ist als die Abmessungen der Handhabe 60.

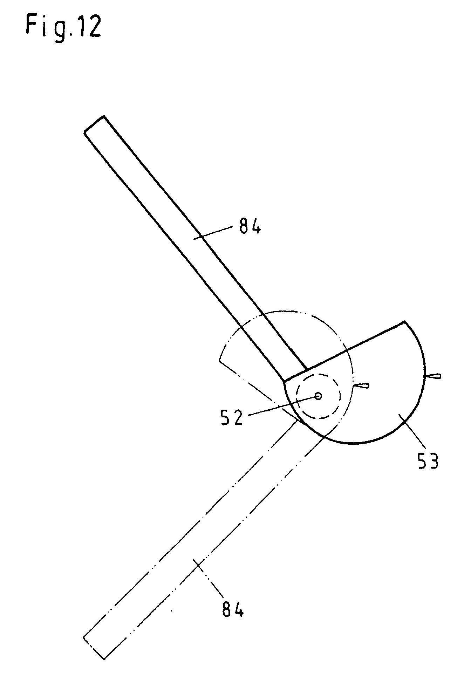

Statt des Schwenkantriebes 55, bei dem über ein Seil 56 die Kraft zum Verschwenken des Bogenstückes 53 aufgebracht wird, ist es auch möglich, das Bogenstück 53 um seine Achse 52 mit Hilfe eines Hebels 84 zu verschwenken. Dieser Hebel 66 ist mit dem Bogenstück 53 fest verbunden (Fig. 12).

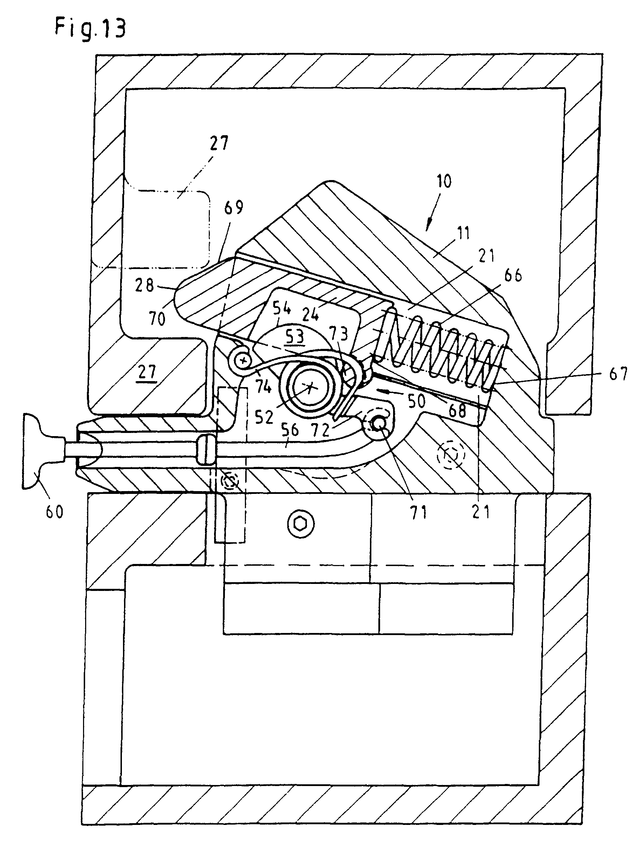

Eine weitere Bedienungsvereinfachung ergibt sich bei einem mit einem Mechanismus 50 zum Ver- und Entriegeln versehenen Staustück 10 dadurch, daß der Riegel 24 nicht mehr wie bei den bereits beschriebenen Ausführungsformen über ein Steuerende 29 in die jeweils gewünschte Stellung verschoben wird, sondern ausschließlich ein Verriegelungsende 28 aufweist, mit dem der Riegel 24 ständig von einer sich in der Führung 21 abstützenden Druckfeder 66 in die Verriegelungsstellung beaufschlagt wird. Dabei stützt sich die Druckfeder 66 einerseits an einer den Riegel 24 begrenzenden Hinterwand 68 und andererseits an einem die Führung 21 begrenzenden Ende 67 ab (Fig. 13-17).

Beim Verriegeln des Containers 2, 3, 4 wird dessen Seitenfläche 27 in Richtung auf das Verriegelungsende 28 des Riegels 24 abgesenkt. Das Verriegelungsende 28 besitzt in diesem Falle eine die Seitenfläche 27 führende Gleitfläche 69, die unter dem Druck der sich absenkenden Seitenfläche 27 in Richtung auf die Führung 21 ausweicht und dabei die Druckfeder 66 spannt. Sobald der Riegel 24 soweit zurückgewichen ist, daß die Seitenfläche 27 am äußersten Punkt des Verriegelungsendes 28 vorbei in die Verriegelungsposition gekommen ist, wird der Riegel 24 von der Druckfeder 66 wieder in die Verriegelungsstellung zurückgeschoben. Nunmehr ist die Containerecke 6 von dem Riegel 24 automatisch verriegelt.

Soll die Verriegelung aufgehoben werden, wird der Mechanismus 50 zum Ver- und Entriegeln betätigt. Dabei wird über die Handhabung 60 eine Kraft in das Seil 56 eingeleitet. Dieses ist über ein Schwenkgelenk 71 an einem Schwenkhebel 72 schwenkbar angelenkt. Der Schwenkhebel 72 ist mit dem Bogenstück 53 fest verbunden und gemeinsam mit diesem um die Achse 52 verschwenkbar gelagert. Beim Verschwenken des Bogenstückes 53 wird der Bogen 54 gegen eine am Riegel 24 ausgebildete Druckfläche 73 gepresst, so daß der Riegel 24 mit zunehmender Verschwenkung des Bogenstückes 53 in der Führung 21 aus der Verriegelungsstellung nach hinten gleitet und dabei die Druckfeder 66 vorspannt. Gleichzeitig wird eine den Mechanismus 50 umgebende Spiralfeder 74 gespannt, die nach einer Entlastung des Seils 56 dafür sorgt, daß das Bogenstück 53 wieder in seine Ausgangsstellung zurückgeschwenkt wird, in der eine Beaufschlagung des Riegels 24 nicht erfolgt.

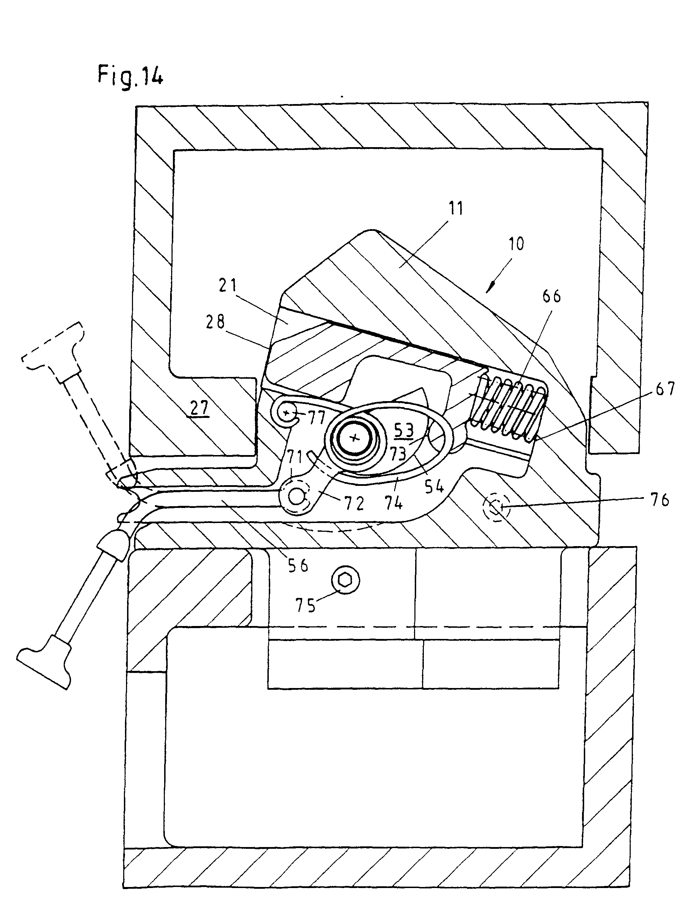

Nachdem der Riegel 24 aus einer Verriegelungsstellung zurückgezogen worden ist, kann die Seitenfläche 27 über den äußersten Punkt 70 hinweggleiten und von dem Führungsstück 11 abgehoben werden. Diese Entriegelungsposition ist in Fig. 14 dargestellt.

Zum Zusammenbau jedes Staustückes 10 ist dieses in Längsrichtung geteilt. Dadurch entstehen zwei in Stahlguß herstellbare Hälften, die durch Verbindungsschrauben 75, 76, 77 zusammengehalten werden. Dabei ist die Verbindungsschraube 77 zusätzlich als Halterung für die Spiralfeder 74 ausgebildet.

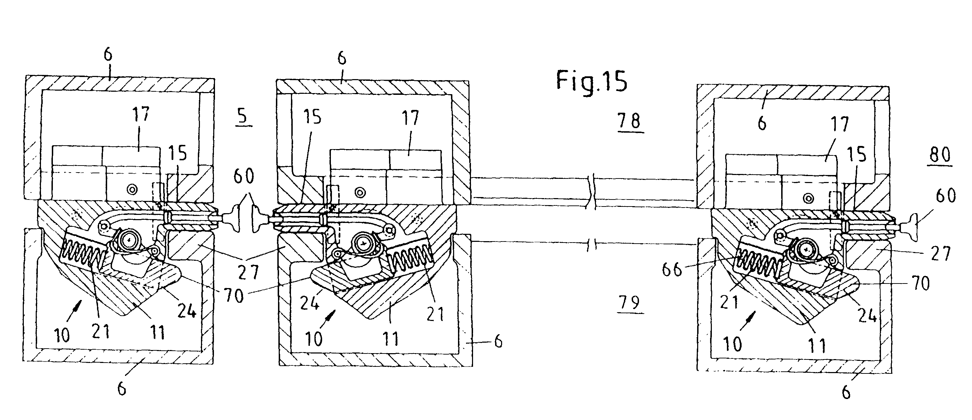

Der große Vorteil dieser Ausführungsform des Staustückes 10 besteht darin, daß sie universell 1 und ohne jede Änderung als handbetätigtes Staustück 10 und auch beispielsweise im Bereich der 20'-ISO-Containerfuge 5 im automatischen Betrieb Verwendung finden kann. Diese Fälle sind in den Fig. 15 bis 17 dargestellt. Die Fig. 15 läßt erkennen, daß das Staustück 10 in der Stauart hängend mit seinem Verriegelungsstück 17 in einer Containerecke 6 eines im übrigen nicht dargestellten oberen Containers eingehängt wird. Dieser obere Container 78 wird in Richtung auf einen unteren Container 79 abgesenkt, so daß das Staustück 10 mit seinem Führungsstück 11 in die Containerecke 6 des unteren Containers 79 hineingleitet. Dabei wird der Riegel 24 von der Seitenfläche 27 der am unteren Container 79 vorgesehenen Containerecke 6 in Richtung auf die Führung 21 beaufschlagt. Die Seitenfläche 27 gleitet über den äußersten Punkt 70 des Riegels 24 hinweg, sobald der obere Container 78 auf der Arbeitsfläche 15 des Staustückes 10 steht. Dabei erfolgt die Verriegelung automatisch sowohl im Bereich der 20'-ISO-Containerfuge 5 als auch im gegenüberliegenden Bereich 80.

Soll nun der obere Container 78 wieder abgehoben werden, werden zunächst im manuell zugänglichen Bereich des Containers zwei auf einer Stirnseite des Containers liegende Staustücke 10 entriegelt. Das geschieht durch Betätigung der Handhabe 60, wodurch das Bogenstück 53 verschwenkt wird, so daß sich der Bogen 54 an der Druckfläche 73 abstützt. Dadurch wird der Riegel 24 in die Führung 21 zurückgezogen entgegen der Wirkung der Druckfeder 66. Nunmehr kann der obere Container 78 im Bereich der beiden manuell entriegelten Staustücke 10 angehoben werden. Dabei sind die übrigen Staustücke 10 im Bereich der gegenüberliegenden Stirnseite des Containers 78 noch mit dem darunterliegenden Container 79 zusammengekuppelt. Dadurch kommt es beim Anheben des oberen Containers 78 lediglich zu einem Verkippen desselben. Das hat zur Folge, daß die senkrechte Rückseite des Führungsstückes 11, die dem Verriegelungsende 28 des Riegels 24 weggerichtet ist, außer Anlage zur Seitenfläche 27 der Ausnehmung im Eckbeschlag der Containerecke 6 des unteren Containers 29 gelangt. Dadurch kann der obere Container 78 in Längsrichtung zum unteren Container 79 (bezogen auf die Fig. 15 nach rechts) bewegt werden. Aufgrund dessen findet eine Relativbewegung des Führungsstückes 11 in der im Bereich einer 20'-ISO-Containerfuge 5 liegenden Containerecke 6 des unteren Containers 79 statt. Diese Relativbewegung führt dazu, daß das aus der Führung 21 des Führungsstücks 11 herausragende Verriegelungsende 28 des Riegels 24 aus der Containerecke 6 des unteren Containers 79 herausrutscht. Dabei gleitet der Riegel 24 mit seiner Vorderkante 39 an der Seitenfläche 27 der Ausnehmung in der Containerecke 6 des unteren Containers 79 entlang. Es kann gegebenenfalls (alternativ) durch Ausbildung der Vorderkante 39 des Riegels 24 als Gleitkante 81 ab einer bestimmten Relativbewegung des Riegels 24 bzw. des Führungsstücks 11 in der Containerecke 6 der Riegel 24 in Richtung der Führung 21 beaufschlagt werden, so daß auf diese Weise die Druckfeder 66 gespannt wird und der Riegel 24 ganz oder teilweise in die Führung 21 hineingedrückt wird. Es kann dann die Seitenfläche 27 über den äußersten Punkt der Gleitfläche 81 hinweggleiten und auf diese Weise das Staustück 10 aus der Öffnung 8 der Containerecke 6 herausgelangen.

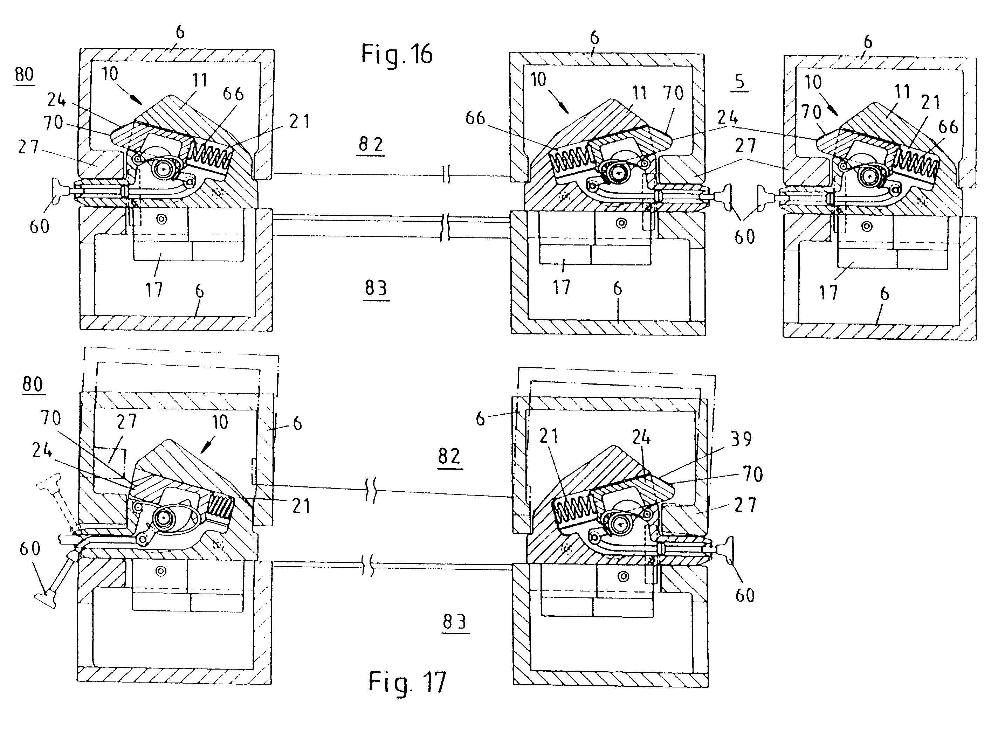

In ähnlicher Weise erfolgt eine Ver- und Entriegelung eines oberen Containers 82 gegenüber einem unteren Container 83, wenn die Staustücke 10 mit ihren Verriegelungsstücken 17 in die Containerecken 6 des unteren Containers 83 hineingesteckt sind. In diesem Falle wird der obere Container 82 auf das Führungsstück 11, das sich auf der Containerecke 6 des unteren Containers 83 erhebt, abgesenkt (Fig. 16 und 17). Dabei drückt die Seitenfläche 27 der am oberen Container 82 angebrachten Containerecke 6 den Riegel 24 in seine Führung 21. Sobald die Seitenfläche 27 den äußersten Punkt 70 passiert hat, drückt die vorgespannte Druckfeder 66 den Riegel 24 wieder in seine Verriegelungsstellung, so daß der obere Container sowohl im Bereich der 20'-ISO-Containerfuge 5 als auch im gegenüberliegenden Bereich 80 verriegelt ist.

Beim Abheben des oberen Containers 83 werden zunächst die beiden auf einer Stirnseite liegenden Staustücke 10 in ihrem für die Handhabung zugänglichen Bereich dadurch entriegelt, daß an der Handhabe 60 des jeweiligen Staustückes 10 gezogen wird. Dabei wird der Riegel 24 in die Führung 21 des jeweiligen Staustückes 10 zurückgezogen. Die Seitenfläche 27 des jeweiligen Staustückes 10 kann über den äußersten Punkt der entsprechenden Containerecke 6 hinweggleiten. Dadurch erhält der obere Container 82 eine Schräglage, weil er im Bereich der an der gegenüberliegenden Stirnseite sich befindenden Containerecken 6, die im Hinblick auf die Enge der 20'-ISO-Containerfuge 5 nicht manuell über die Handhaben 60 entriegelt werden kann, noch festgehalten wird. Durch die Schrägstellung werden jedoch die Rückseiten der Führungsstücke 11 von den benachbarten Seitenflächen 27 der entsprechenden Containerecken 6 des oberen Containers 82 freigegeben. Dadurch werden die aus den Führungen 21 herausragenden Vorderkanten 39 der Riegel 24 der Staustücke 10 im Bereich der engen 20'-ISO-Containerfuge 5 aus dem Eckbeschlag der jeweiligen Containerecke 6 des oberen Containers 82 herausgeschwenkt (Fig. 18). Nunmehr kann der gesamte obere Container 82 vom unteren Container 83 abgehoben werden.

Wichtig für die anhand der Fig. 15 bis 17 beschriebenen Entriegelungsvorgänge ist, daß die Riegel 24 schräg bzw. geneigt zur durch die Unterseite oder Oberseite des jeweiligen Containers verlaufende Ebene sind. Diese Neigung erleichtert das Ausfädeln der Führungsstücke 11 mit in der Verriegelungsstellung sich befindlichen Riegel 24 aus den entsprechenden Containerecken 6. Weiterhin kann dieses Ausfädeln begünstigt werden, indem die von der Führung 21 durchdrungene Vorderfläche des Führungsstückes 11 gegenüber der Arbeitsfläche 15 leicht geneigt ist, so daß die Verschiebung der sich anhebenden Seitenfläche 27 des entsprechenden Containers in Richtung auf die Vorderkante 39 des Riegels 24 begünstigt wird.

Durch die anhand der Fig. 15 bis 17 beschriebenen Funktionen wird die Verwendung eines einheitlichen Staustückes 10 sowohl im Bereich der 20'-ISO-Containerfuge 5 als auch in dem für die manuelle Betätigung des Staustückes 10 zugänglichen Bereich 80 ermöglicht. Die bisher notwendige Unterscheidung zwischen Staustücken, die nur in der engen 20'-ISO-Containerfuge 5 verwendet werden können und solchen, die für eine manuelle Handhabung zugänglichen Bereich eingesetzt werden, kann aufgrund des für alle Fälle verwendbaren einheitlichen erfindungsgemäßen Staustückes, und zwar eines semiautomatischen Staustückes, vermieden werden.

## Patentansprüche

1. Verfahren zum Stauen eines Behälters auf einer Auflage (1), insbesondere mindestens einem anderen Behälter, indem mindestens ein Staustück unter dem Behälter oder auf der Auflage (1) befestigt und mit seinem Führungsstück (11) in eine Ausnehmung eingeführt wird, die in der Auflage (1) oder einer der Auflage (1) zugewandten Fläche des Behälters vorgesehen ist und wobei zum Lösen des Behälters von der Auflage (1) oder mindestens einem anderen Behälter zwei Staustücke auf einer Seite des Behälters durch Zugantriebe geöffnet und der Behälter an der Seite dieser gelösten Staustücke einseitig angehoben und dadurch verkippt wird, wobei durch dieses Verkippen die Verriegelung der beiden übrigen Staustücke lösbar ist, **dadurch gekennzeichnet, dass** alle vier Ecken des Behälters mit im Wesentlichen gleichen Staustücken (10) mit der Auflage bzw. mindestens einem anderen Behälter verbunden werden, wozu alle vier Staustücke (10) einen Zugantrieb aufweisen und durch ein Verkippen ein Behälter ohne Zuhilfenahme der Zugantriebe zweier Staustücke (10) vom anderen Behälter oder der Auflage (1) lösbar ist.

2. Verfahren nach Anspruch 1, **dadurch gekennzeichnet, dass** diejenigen Staustücke (10), die nicht manuell entriegelt werden, durch Herausschwenken ihrer Führungsstücke (11) aus den Ausnehmungen der Behälter und eine Relativverschiebung des abzukoppelnden Behälters zur Auflage oder mindestens einem anderen Behälter selbsttätig gelöst werden.

3. Verfahren nach Anspruch 1, **dadurch gekennzeichnet, dass** die Staustücke (10) einen Riegel (24) aufweisen, der durch einen manuell betreibbaren Mechanismus (50) aus der Verriegelungsstellung gelöst und der Behälter im Bereich der aus der Verriegelungsstellung gelösten Staustücke (10) einseitig angehoben wird und der auf diese Weise geneigte Behälter im Bereich der sich noch in ihrer Verriegelungsstellung befindlichen Staustücke (10) über eine am Verriegelungsende (28) des Riegels (24) vorgesehene Gleitfläche (69) aus der Verriegelungsstellung gleitet.

4. Verfahren nach Anspruch 1, **dadurch gekennzeichnet, dass** als Staustücke (10) semiautomatische Staustücke (10) verwendet werden.

5. Staustück mit einem Führungsstück zum Verriegeln eines Behälters gegenüber einer Auflage, insbesondere mindestens einem anderen Behälter, worauf sich der Behälter mit seiner Unterfläche abstützt, in der mindestens eine Ausnehmung vorgesehen ist, in der das sich gegenüber der Auflage erhebende Führungsstück führend lagerbar ist und die Verriegelung des Führungsstücks (11) in der Ausnehmung durch eine Relativbewegung des Behälters mit der Ausnehmung gegenüber dem Führungsstück (11) lösbar ist, **dadurch gekennzeichnet, dass** das Führungsstück (11) in der Ausnehmung durch einen Riegel (24) verriegelbar ist, der in einer sich in dem Führungsstück (11) erstreckenden Führung (21) in eine Verriegelungsstellung verschieblich gelagert ist, und die Verriegelung des Führungsstückes (11) in der Ausnehmung alternativ durch einen Zugantrieb lösbar ist.

6. Staustück nach Anspruch 5, **dadurch gekennzeichnet, dass** der Riegel (24) ein dem Verriegelungsende (28) abgewandtes Steuerende (29) aufweist, das in der Verriegelungsstellung des Riegels (24) durch eine hierauf einwirkende Kraft beaufschlagt ist.

7. Staustück nach Anspruch 6, **dadurch gekennzeichnet, dass** das Steuerende (29) in der Verriegelungsstellung von dem auf die Auflage (1) abgesenkten Behälter beaufschlagt ist.

8. Staustück mit einem Führungsstück zum Verriegeln eines Behälters gegenüber einer Auflage, insbesondere mindestens einem anderen Behälter, worauf sich der Behälter mit seiner Unterfläche abstützt, in der mindestens eine Ausnehmung vorgesehen ist, worin das sich gegenüber der Auflage erhebende Führungsstück führend lagerbar ist, **dadurch gekennzeichnet, dass** das Führungsstück (11) in der Ausnehmung durch einen mit einem Zugantrieb korrespondierenden Riegel (24) verriegelbar ist, der in einer sich in dem Führungsstück (11) erstreckenden Führung (21) in eine Verriegelungsstellung verschieblich gelagert ist, in der ein Verriegelungsende (28) des Riegels (24) aus der Führung (21) heraus in die Ausnehmung ragt, und der Riegel (24) sich schräg zu einer von der Auflage (1) aufgespannten Ebene erstreckt, derart, dass der Abstand des Riegels (24) zur Auflage (1) sich zu seinem Verriegelungsende (28) hin vergrößert zum Lösen der Verriegelung zwischen den Behältern oder des Behälters und der Auflage durch eine Relativbewegung eines Behälters zum anderen Behälter oder der Auflage.

9. Staustück nach einem der vorhergehenden Ansprüche, **dadurch gekennzeichnet, dass** der schräg in der Führung (21) verschieblich gelagerte Riegel (24) mit seinem Steuerende (29) in der Ebene der Auflage (1) einmündet, und das Verriegelungsende (28) oberhalb der Ebene in einem Abstand zu dieser liegt, der der in der Ausnehmung vorgesehenen Verriegelungsposition (25) entspricht.

10. Staustück nach einem der vorhergehenden Ansprüche, **dadurch gekennzeichnet, dass** der Riegel (24) aus mindestens zwei in seiner Längsrichtung hintereinander angeordneten Teilstücken (40, 41) besteht.

11. Staustück nach einem der vorhergehenden Ansprüche, **dadurch gekennzeichnet dass** dem Riegel (24)ein Mechanismus (50) zum Verriegeln und Entriegeln zugeordnet ist.

12. Staustück nach Anspruch 11, **dadurch gekennzeichnet, dass** der Mechanismus (50) zum Verriegeln und Entriegeln als ein sich vorzugsweise am Riegel (24) abstützender Exzenter (51) ausgebildet ist.

13. Staustück nach Anspruch 12, **dadurch gekennzeichnet, dass** der Exzenter (51) zum Verriegeln und Entriegeln sich an dem Riegel (24) abstützt.

14. Staustück nach Anspruch 12, **dadurch gekennzeichnet, dass** der Exzenter (51) auf einer Achse (52) gelagert ist und mit dem Zugantrieb zu seinem Verschwenken verbunden ist.

15. Staustück nach Anspruch 14, **dadurch gekennzeichnet, dass** der Zugantrieb ein Seil (56) und eine am freien Ende desselben angeordnete Handhabe (60) aufweist, wobei das Seil (56) vorzugsweise an einem mit dem Exzenter (51) verbundenen Schwenkhebel (72) angelenkt ist.

16. Staustück nach Anspruch 12, **dadurch gekennzeichnet, dass** der Exzenter (51) als ein um eine Achse (52) schwenkbares von einem Bogen (54) begrenztes Bogenstück (53) ausgebildet ist, das von der Achse (52) außerhalb eines Mittelpunktes des Bogens (54) durchdrungen ist und sich mit dem Bogen (54) an einer am Riegel (24) ausgebildeten Bogenfläche (65) abstützt.

17. Staustück nach Anspruch 16, **dadurch gekennzeichnet, dass** die Bogenfläche (65) eine dem Bogen (54) entsprechende Krümmung aufweist.

18. Staustück nach einem der vorhergehenden Ansprüche, **dadurch gekennzeichnet, dass** das Bogenstück (53) mit einem Hebelantrieb verbindbar ist.

19. Staustück nach einem der vorhergehenden Ansprüche, **dadurch gekennzeichnet, dass** der Riegel (24) von einem sich absenkenden Container (2, 3, 4) in der Führung (21) entgegen der Kraft der Feder (31) verschiebbar ist.

20. Staustück nach Anspruch 19, **dadurch gekennzeichnet, dass** der Riegel (24) an seinem in der Verriegelungsstellung aus der Führung (21) herausragenden Verriegelungsende (28) eine vom sich absenkenden Container (2, 3, 4) beaufschlagte und den Riegel (24) dabei in Richtung der Führung (21) verschiebende Gleitfläche (69) aufweist.

21. Staustück nach Anspruch 20, **dadurch gekennzeichnet, dass** der Riegel (24) an seinem Verriegelungsende (28) eine vom sich abhebenden Container (2, 3, 4) beaufschlagte Druckfläche aufweist, die den Riegel (24) entgegen der Federkraft beaufschlagt.

22. Staustück nach einem der vorhergehenden Ansprüche, **dadurch gekennzeichnet, dass** das Führungsstück (11) in einem von der Verriegelungsposition (25) vorgegebenen lotrechten Abstand vom Verriegelungsende (28) des Riegels (24) mit einer planparallel zur Auflage (1) verlaufenden Arbeitsfläche (15) umgeben ist, deren Unterfläche (16) sich auf der Auflage (1) abstützt und auf deren der oberen Begrenzungsfläche zugewandten etwa planparallel zur Unterfläche (16) verlaufenden Oberseite die Unterfläche (13) des Behälters abstützbar ist.

23. Staustück nach einem der vorhergehenden Ansprüche, **dadurch gekennzeichnet, dass** die Gleitfläche ein sich in eine von der 20'-ISO-Containerfuge (5) abgewandte Richtung ausgerichtetes Gefälle aufweist.

24. Staustück nach einem der vorhergehenden Ansprüche, **dadurch gekennzeichnet, dass** von den beiden Führungsstücken, die auf einer der 20'-ISO-Containerfuge (5) zugewandten Seite eines Containers (2, 3, 4) Verwendung finden, das eine eine Gleitfläche mit einem sich in Richtung der Fuge (5) erstreckenden Gefälle und das andere ein sich in entgegengesetzte Richtung erstreckendes Gefälle aufweist.

25. Staustück nach einem der vorhergehenden Ansprüche, **dadurch gekennzeichnet, dass** das Seil (56) und die Handhabe (60) derart bemessen bzw. ausgebildet sind, dass mindestens die Handhabe (60) wenigstens teilweise in einer Ausnehmung des Behälters, insbesondere in einer Containerecke (6) eintreten kann.

## Claims

1. Method for holding a container on a support (1), in particular at least one other container, by at least one holding piece being fixed under the container or on the support (1) and being inserted with its guide piece (11) into a recess, which is provided in the support (1) or an area of the container facing the support (1) and, in order to release the container from the support (1) or at least one other container, two holding pieces on one side of the container being opened by means of pulling drives and the containers being lifted on one side, on the side of these released holding pieces, and tilted as a result, it being possible for the locking of the two other holding pieces to be released as a result of this tilting, **characterized in that** all four corners of the container are connected by substantially identical holding pieces (10) to the support or at least one other container for which purpose all four holding pieces (10) have a pulling drive and, by means of tilting, a container can be released from the other container or the support (1) without the aid of the pulling drives of two holding pieces (10).

2. Method according to Claim 1, **characterized in that** those holding pieces (10) which are not unlocked manually are released automatically by pivoting their guide pieces (11) out of the recesses in the containers and by means of a relative displacement of the container to be uncoupled in relation to the support or at least one other container.

3. Method according to Claim 1, **characterized in that** the holding pieces (10) have a bolt (24), which is released from the locked position by means of a manually operated mechanism (50) and the container is lifted on one side in the area of the holding pieces (10) released from the locked position, and the container inclined in this way, in the area of the holding pieces (10) still located in their locked position, sliding out of the locked position over a sliding face (69) provided at the locking end (28) of the bolt (24).

4. Method according to Claim 1, **characterized in that** the holding pieces (10) used are semi-automatic holding pieces (10).

5. Holding piece having a guide piece for locking a container with respect to a support, in particular at least one other container, on which the container is supported by its lower face, in which at least one recess is provided in which the guide piece, elevated with respect to the support, is mounted in a guided manner, and the locking of the guide piece (11) in the recess can be released by means of a relative movement of the container with the recess with respect to the guide piece (11), **characterized in that** the guide piece (11) can be locked in the recess by means of a bolt (24), which is mounted such that it can be displaced into a locked position in a guide (21) extending in the guide piece (11), and the locking of the guide piece (11) in the recess being alternatively releasable by means of a pulling drive.

6. Holding piece according to Claim 5, **characterized in that** the bolt (24) has a control end (29) which faces away from the locking end (28) and, in the locked position of the bolt (24), is acted on by a force acting on the said bolt (24).

7. Holding piece according to Claim 6, **characterized in that** the control end (29) is acted on in the locked position by the container lowered onto the support (1).

8. Holding piece having a guide piece for locking a container with respect to a support, in particular at least one other container, on which the container is supported by its lower face, in which at least one recess is provided, in which the guide piece, elevated with respect to the support, is mounted in a guided manner, **characterized in that** the guide piece (11) can be locked in the recess by means of a bolt (24) that corresponds to a pulling drive and which is mounted such that it can be displaced, in a guide (21) extending in the guide piece (11), into a locking position in which a locking end (28) of the bolt (24) projects out of the guide (21) into the recess, and the bolt (24) extends obliquely with respect to a plane covered by the support (1) in such a way that the distance of the bolt (24) to the support (1) is increased towards it locking end (28) in order to release the locking action between the containers or the container and the support as a result of a relative movement of a container in relation to the other container or the support.

9. Holding piece according to one of the preceding claims, **characterized in that** the bolt (24) displaceably mounted obliquely in the guide (21) opens with its control end (29) into the plane of the support (1), and the locking end (28) above the plane is located at a distance from the latter which corresponds to the locked position (25) provided in the recess.

10. Holding piece as claimed in one of the preceding claims, **characterized in that** the bolt (24) comprises at least two portions (40, 41) arranged one behind another in its longitudinal direction.

11. Holding piece according to one of the preceding claims, **characterized in that** the bolt (24) is assigned a mechanism (50) for locking and unlocking.

12. Holding piece according to Claim 11, **characterized in that** the mechanism (50) for locking and unlocking is formed as an eccentric (51) preferably supported on the bolt (24).

13. Holding piece according to Claim 12, **characterized in that** the eccentric (51) for locking and unlocking is supported on the bolt (24).

14. Holding piece according to Claim 12, **characterized in that** the eccentric (51) is mounted on a shaft (52) and is connected to the pulling drive in order to pivot it.

15. Holding piece according to Claim 14, **characterized in that** the pulling drive has a cable (56) and a handhold (60) arranged at the free end of the said cable, the cable (56) preferably being attached to a pivoting lever (72) connected to the eccentric (51).

16. Holding piece according to Claim 12, **characterized in that** the eccentric (51) is formed as a curved piece (53) that can be pivoted about a shaft (52) and bounded by a curve (54), through which the shaft (52) passes outside a centre of the curve (54) and is supported with the curve (54) on a curved face (65) formed on the bolt (24).

17. Holding piece according to Claim 16, **characterized in that** the curved face (65) has a curvature corresponding to the curve (54).

18. Holding piece according to one of the preceding claims, **characterized in that** the curved piece (53) can be connected to a lever drive.

19. Holding piece according to one of the preceding claims, **characterized in that** the bolt (24) can be displaced in the guide (21), counter to the force of the spring (31), by a container (2, 3, 4) being lowered.

20. Holding piece according to Claim 19, **characterized in that** at its locking end (28) projecting out of the guide (21) in the locked position, the bolt (24) has a sliding face (69) which is acted on by the container (2, 3, 4) being lowered and in the process displaces the bolt (24) in the direction of the guide (21).

21. Holding piece according to Claim 20, **characterized in that** at its locking end (28), the bolt (24) has a pressure face which is acted on by the container (2, 3, 4) being lowered and which acts on the bolt (24) counter to the spring force.

22. Holding piece according to one of the preceding claims, **characterized in that** the guide piece (11) is surrounded at a vertical distance, predefined by the locked position (25), from the locking end (28) of the bolt (24) by an operating face (15) running plane-parallel to the support (1), the lower face (16) of the said operating face (15) being supported on the support (1) and it being possible for the lower face (13) of the container to be supported on the upper side of the said operating face (15), facing the upper boundary face and running approximately plane-parallel to the lower face (16).

23. Holding piece according to one of the preceding claims, **characterized in that** the sliding face has a slope aligned in the direction facing away from the 20'-ISO container joint (5).

24. Holding piece according to one of the preceding claims, **characterized in that** of the two guide pieces which are used on a side of a container (2, 3, 4) facing the 20'-ISO container joint (5), one sliding face has a slope extending in the direction of the joint (5) and the other has a slope extending in the opposite direction.

25. Holding piece according to one of the preceding claims, **characterized in that** the cable (56) and the handhold (60) are dimensioned and formed in such a way that at least the handhold (60) can at least partly enter a recess in the container, in particular in a container corner (6).

## Revendications

1. Procédé permettant de retenir un conteneur sur une surface d'appui (1), en particulier sur au moins un autre conteneur, dans lequel au moins un élément de retenue est fixé en dessous du conteneur ou sur la surface d'appui (1) et est introduit avec son élément de guidage (11) dans un évidement qui est prévu dans la surface d'appui (1) ou dans une surface du conteneur orientée vers la surface d'appui (1) et dans lequel pour détacher le conteneur de la surface d'appui (1) ou d'au moins un autre conteneur, deux éléments de retenue sur un côté du conteneur sont ouverts par commande de traction et le conteneur est soulevé du côté de ces éléments de retenue détachés et de ce fait basculé, dans lequel le verrouillage des deux autres éléments de retenue peut être déverrouillés grâce à ce basculement, **caractérisé en ce que** les quatre coins du conteneur sont reliés par des éléments de retenue (10) essentiellement identiques à la surface d'appui ou à au moins un autre conteneur, raison pour laquelle les quatre éléments de retenue (10) présentent une commande de traction et un conteneur peut grâce au basculement être détaché de l'autre conteneur ou de la surface d'appui (1) sans l'aide des commandes de traction de deux éléments de retenue (10).

2. Procédé selon la revendication 1, **caractérisé en ce que** les éléments de retenue (10) qui ne sont pas déverrouillés manuellement, sont détachés automatiquement par enlèvement par basculement de leurs éléments de guidage (11) des évidements du conteneur et par un déplacement relatif du conteneur à découpler par rapport à la surface d'appui ou à u moins un autre conteneur.

3. Procédé selon la revendication 1, **caractérisé en ce que** les éléments de retenue (10) présentent un verrou (24) qui est libéré de la position de verrouillage par un mécanisme (50) actionné manuellement et le conteneur est soulevé d'un côté dans la région des éléments de retenue (10) libérés de la position de verrouillage et le conteneur incliné de cette façon dans la région des éléments de retenue (10) se trouvant encore dans leur position de verrouillage glisse hors de la position de verrouillage sur une surface de glissement (69) prévue à l'extrémité de verrouillage (28) du verrou (24).

4. Procédé selon la revendication 1, **caractérisé en ce que** des éléments de retenue (10) semi-automatiques sont utilisés comme éléments de retenue (10).

5. Élément de retenue avec un élément de guidage permettant le verrouillage d'un conteneur par rapport à une surface d'appui, en particulier à au moins un autre conteneur, sur laquelle le conteneur s'appuie par sa surface inférieure, dans laquelle il est prévu au moins un évidement dans lequel l'élément de guidage s'élevant par rapport à la surface d'appui peut être placé de manière guidée et le verrouillage de l'élément de guidage (11) dans l'évidement peut être libéré par un déplacement relatif du conteneur avec l'évidement par rapport à l'élément de guidage (11), **caractérisé en ce que** l'élément de guidage (11) peut être verrouillé dans l'évidement par un verrou (24) qui est placé de manière mobile dans une coulisse (21) s'étendant dans l'élément de guidage (11) dans une position de verrouillage, et le verrouillage de l'élément de guidage (11) dans l'évidement peut être libéré alternativement par une commande de traction.

6. Élément de retenue selon la revendication 5, **caractérisé en ce que** le verrou (24) présente une extrémité de commande (29) opposée à l'extrémité de verrouillage (28), laquelle extrémité de commande applique dans la position de verrouillage du verrou (24) une force agissante sur celui-ci.

7. Élément de retenue selon la revendication 6, **caractérisé en ce que** l'extrémité de commande (29) dans la position de verrouillage est actionnée par le conteneur s'abaissant sur la surface d'appui (1).

8. Élément de retenue avec un élément de guidage permettant le verrouillage d'un conteneur par rapport à une surface d'appui, en particulier à au moins un autre conteneur, sur laquelle le conteneur s'appuie par sa surface inférieure, dans laquelle il est prévu au moins un évidement dans lequel l'élément de guidage s'élevant par rapport à la surface d'appui peut être placé de manière guidée, **caractérisé en ce que** l'élément de guidage (11) peut être verrouillé dans l'évidement par un verrou (24) correspondant avec une commande de traction, lequel verrou est placé de manière mobile dans une coulisse (21) s'étendant dans l'élément de guidage (11) dans une position de verrouillage dans laquelle une extrémité de verrouillage (28) du verrou (24) fait saillie de la coulisse (21) dans l'évidement, et le verrou (24) s'étend en oblique par rapport à un plan formé par la surface d'appui (1) de telle manière que l'écart du verrou (24) par rapport à la surface d'appui (1) s'agrandisse jusqu'à son extrémité de verrouillage (28) pour libérer le verrouillage entre les conteneurs ou du conteneur et de la surface d'appui par un déplacement relatif du conteneur par rapport à l'autre conteneur ou à la surface d'appui.

9. Élément de retenue selon une des revendications précédentes, **caractérisé en ce que** le verrou (24) placé obliquement de manière mobile dans la coulisse (21) débouche avec son extrémité de commande (29) dans le plan de la surface d'appui (1), et l'extrémité de verrouillage (28) se trouve au-dessus du plan à une distance de celui-ci qui correspond à la position de verrouillage (25) prévue dans l'évidement.

10. Élément de retenue selon une des revendications précédentes, **caractérisé en ce que** le verrou (24) est constitué d'au moins deux pièces (40, 41) disposées l'une derrière l'autre dans son sens longitudinal.

11. Élément de retenue selon une des revendications précédentes, **caractérisé en ce qu'**un mécanisme (50) de verrouillage et de déverrouillage est coordonné au verrou (24).

12. Élément de retenue selon la revendication 11, **caractérisé en ce que** le mécanisme (50) de verrouillage et de déverrouillage est conformé de préférence comme une came excentrée (51) s'appuyant sur le verrou (24).

13. Élément de retenue selon la revendication 12, **caractérisé en ce que** la came excentrée (51) pour le verrouillage et le déverrouillage s'appuie sur le verrou (24).

14. Élément de retenue selon la revendication 12, **caractérisé en ce que** la came excentrée (51) est placée sur un axe (52) et reliée à la commande de traction pour son pivotement.

15. Élément de retenue selon la revendication 14, **caractérisé en ce que** la commande de traction présente un câble (56) et une poignée (60) disposée à l'extrémité libre de celui-ci, le câble (56) étant de préférence articulé à un levier pivotant (72) relié à la came excentrée (51).

16. Élément de retenue selon la revendication 12, **caractérisé en ce que** la came excentrée (51) est conformée comme un élément en arc (53) limité par une courbe (54) et pouvant pivoter autour d'un axe (52), lequel élément en arc est percé par l'axe (52) en dehors d'un point central de la courbe (54) et s'appuie par la courbe (54) sur une surface courbe (65) formée sur le verrou (24).

17. Élément de retenue selon la revendication 16, **caractérisé en ce que** la surface courbe (65) présente une courbure correspondant à la courbe (54).

18. Élément de retenue selon une des revendications précédentes, **caractérisé en ce que** l'élément en arc (53) peut être relié à une commande à levier.

19. Élément de retenue selon une des revendications précédentes, **caractérisé en ce que** le verrou (24) peut être déplacé dans la coulisse (21) contre la force du ressort (31) par un conteneur (2, 3, 4) qui s'abaisse.

20. Élément de retenue selon la revendication 19, **caractérisé en ce que** le verrou (24) présente sur son extrémité de verrouillage (28) faisant saillie de la coulisse (21) dans la position de verrouillage une surface de glissement (69) actionnée par le conteneur (2, 3, 4) qui s'abaisse et poussant ainsi le verrou (24) en direction de la coulisse (21).

21. Élément de retenue selon la revendication 20, **caractérisé en ce que** le verrou (24) présente sur son extrémité de verrouillage (28) une surface de pression actionnée par le conteneur (2, 3, 4) qui s'élève, laquelle actionne le verrou (24) dans le sens opposé à la force du ressort.

22. Élément de retenue selon une des revendications précédentes, **caractérisé en ce que** l'élément de guidage (11) est entouré, à une distance verticale de l'extrémité de verrouillage (28) du verrou (24) prédéterminée par la position de verrouillage (25), par une surface de travail (15) s'étendant dans un plan parallèle à la surface d'appui (1), qui a une surface inférieure (16) qui s'appuie sur la surface d'appui (1) et qui a un côté supérieur, s'étendant sensiblement dans un plan parallèle à la surface inférieure (16) et orienté vers la surface périphérique supérieure, sur lequel la surface inférieure (13) du conteneur peut s'appuyer.

23. Élément de retenue selon une des revendications précédentes, **caractérisé en ce que** la surface de glissement présente une déclivité orientée dans le sens opposé à l'espacement (5) entre conteneurs de 20'.

24. Élément de retenue selon une des revendications précédentes, **caractérisé en ce que** des deux éléments de guidage qui sont utilisés sur le côté d'un conteneur (2, 3, 4) orienté vers l'espacement (5) entre conteneurs de 20', l'un présente une surface de glissement avec une déclivité s'étendant dans le sens de l'espacement (5) et l'autre une déclivité d'étendant dans le sens opposé.

25. Élément de retenue selon une des revendications précédentes, **caractérisé en ce que** le câble (56) et la poignée (60) sont dimensionnés ou conformés de telle manière qu'au moins la poignée (60) puisse pénétrer au moins en partie dans un évidement du conteneur, en particulier dans un coin (6) du conteneur.
